# FASCICULE DE BREVET EUROPEEN

(11) **EP 2 268 587 B1**
(45) Date de publication et mention de la délivrance du brevet: **09.07.2014**
(21) Numéro de dépôt: 09742308.1
(22) Date de dépôt: 10.04.2009
(51) Int. Cl.: C03C 17/34, C03C 17/36, C03C 17/245, C03C 17/40

(54) **PROCEDE DE DÉPÔT DE COUCHE MINCE**
DÜNNSCHICHTABLAGERUNGSVERFAHREN
METHOD FOR THIN LAYER DEPOSITION

(30) Priorité: 11.04.2008 FR 0852454
(43) Date de publication de la demande: 05.01.2011
(73) Titulaire: Saint-Gobain Glass France, 92400 Courbevoie (FR)
(72) Inventeur: DURANDEAU, Anne, F-75009 Paris (FR); KHARCHENKO, Andriy, F-91120 Palaiseau (FR); NADAUD, Nicolas, F-75013 Paris (FR)
(74) Mandataire: Teyssedre, Laurent
(86) Numéro de dépôt international: PCT/FR2009/050658
(87) Numéro de publication internationale: WO 2009/136110

(56) Documents cités:
- EP-A- 1 867 614
- WO-A-03/051787
- US-A- 4 216 259
- US-A1- 2003 003 304

## Description

L'invention se rapporte au domaine des couches minces inorganiques, notamment déposées sur des substrats en verre. Elle concerne plus particulièrement un procédé de cristallisation au moins partielle desdites couches minces et certains produits obtenus à l'aide de ce procédé.

De nombreuses couches minces sont déposées sur des substrats, notamment en verre plat ou faiblement bombé, afin de conférer aux matériaux obtenus des propriétés particulières : propriétés optiques, par exemple de réflexion ou d'absorption de rayonnements d'un domaine de longueurs d'onde données, propriétés de conduction électrique particulière, ou encore propriétés liées à la facilité de nettoyage ou à la possibilité pour le matériau de s'auto-nettoyer.

Ces couches minces sont le plus souvent à base de composés inorganiques : oxydes, nitrures, ou encore métaux. Leur épaisseur varie généralement de quelques nanomètres à quelques centaines de nanomètres, d'où leur qualificatif de « minces ».

On peut en particulier citer les couches minces à base d'oxyde de titane, lesquelles ont la particularité d'être autonettoyantes, en facilitant la dégradation des composés organiques sous l'action de rayonnements ultraviolets et l'élimination des salissures minérales (poussières) sous l'action d'un ruissellement d'eau.

Ces couches présentent la particularité de voir certaines de leurs propriétés améliorées lorsqu'elles sont dans un état au moins partiellement cristallisé. On cherche généralement à augmenter au maximum le taux de cristallisation de ces couches (la proportion massique ou volumique de matière cristallisée) et la taille des grains cristallins (ou la taille de domaines cohérents de diffraction mesurés par des méthodes de diffraction des rayons X), voire dans certains cas à favoriser une forme cristallographique particulière.

Dans le cas de l'oxyde de titane, il est connu que l'oxyde de titane cristallisé sous la forme anatase est bien plus efficace en terme de dégradation des composés organiques que l'oxyde de titane amorphe ou cristallisé sous la forme rutile ou brookite.

Un procédé couramment employé à l'échelle industrielle pour le dépôt de couches minces, notamment sur substrat verrier, est le procédé de pulvérisation cathodique assisté par champ magnétique, appelé procédé « magnétron ». Dans ce procédé, un plasma est créé sous un vide poussé au voisinage d'une cible comprenant les éléments chimiques à déposer. Les espèces actives du plasma, en bombardant la cible, arrachent lesdits éléments, qui se déposent sur le substrat en formant la couche mince désirée. Ce procédé est dit « réactif » lorsque la couche est constituée d'un matériau résultant d'une réaction chimique entre les éléments arrachés de la cible et le gaz contenu dans le plasma. Il est ainsi connu de déposer, par procédé magnétron du type réactif, des couches d'oxyde de titane en employant une cible en titane métallique ou une cible céramique en TiOₓ (avec x < 2) et un gaz plasmagène à base d'oxygène. L'avantage majeur de ce procédé réside dans la possibilité de déposer sur une même ligne un empilement très complexe de couches en faisant successivement défiler le substrat sous différentes cibles, ce généralement dans un seul et même dispositif.

Lors de la mise en oeuvre industrielle du procédé magnétron, le substrat reste à température ambiante ou subit une élévation de température modérée (moins de 80°C), particulièrement lorsque la vitesse de défilement du substrat est élevée (ce qui est généralement recherché pour des raisons économiques). Ce qui peut paraître un avantage constitue toutefois un inconvénient dans le cas des couches précitées, car les faibles températures impliquées ne permettent généralement pas une croissance cristalline suffisante. C'est le cas tout particulièrement pour des couches minces de faible épaisseur et/ou des couches constituées de matériaux dont le point de fusion est très élevé. Les couches obtenues selon ce procédé sont donc majoritairement voire totalement amorphes ou nano-cristallisées (la taille moyenne des grains cristallins étant inférieure à quelques nanomètres), et des traitements thermiques se révèlent nécessaires pour obtenir le taux de cristallisation souhaité ou la taille de grains désirée.

US 2003/003304 décrit un substrat en verre revêtu d'une couche à base d'oxyde de titane et d'une couche anti-reflet.

Des traitements thermiques possibles consistent à réchauffer le substrat soit pendant le dépôt, soit à l'issue du dépôt, en sortie de ligne magnétron. Le plus généralement, des températures d'au moins 200°C ou 300°C sont nécessaires.

Le chauffage du substrat dans les lignes magnétron industrielles (pendant le dépôt) s'est toutefois révélé malaisé à mettre en oeuvre, en particulier car les transferts de chaleur sous vide, nécessairement de nature radiative, sont difficiles à maîtriser et impliquent un coût élevé dans le cas des substrats de grande taille, de plusieurs mètres de largeur. Dans le cas de substrats de verre de faible épaisseur, ce type de traitement implique souvent des risques de casse élevés.

Le chauffage du substrat revêtu à l'issue du dépôt, par exemple en plaçant le substrat dans un four ou une étuve ou en soumettant le substrat au rayonnement infrarouge issu de dispositifs de chauffage conventionnels tels que des lampes infrarouge, présente également des inconvénients car ces différents procédés contribuent à chauffer sans discernement le substrat et la couche mince. Le chauffage du substrat à des températures supérieures à 150°C est susceptible de générer des casses dans le cas de substrats de grande taille (plusieurs mètres de large) car il est impossible d'assurer une température identique sur toute la largeur du substrat. Le chauffage des substrats ralentit également l'ensemble du procédé, car il est nécessaire d'attendre leur refroidissement complet avant d'envisager leur découpe ou leur stockage, qui a généralement lieu en empilant les substrats les uns sur les autres. Un refroidissement très contrôlé est en outre indispensable pour éviter la génération de contraintes au sein du verre, et donc la possibilité de casses. Un tel refroidissement très contrôlé étant très coûteux, le recuit n'est généralement pas suffisamment contrôlé pour éliminer les contraintes thermiques au sein du verre, ce qui génère un nombre accru de casses en ligne. Le recuit présente en outre l'inconvénient de rendre la découpe du verre plus difficile, les fissures ayant une tendance moins forte à se propager linéairement.

Le chauffage des substrats a lieu dans le cas où les vitrages sont bombés et/ou trempés, car un réchauffage du verre au-delà de sa température de ramollissement (généralement à plus de 600°C, voire 700°C pendant quelques minutes) est effectué. La trempe ou le bombage permet donc d'obtenir le résultat souhaité de cristallisation des couches minces. Il serait toutefois coûteux de soumettre à de tels traitements tous les vitrages dans le seul but d'améliorer la cristallisation des couches. En outre, les vitrages trempés ne peuvent plus être découpés, et certains empilements de couches minces ne supportent pas les températures élevées subies lors de la trempe du verre.

Pour résoudre ces problèmes, la demanderesse a mis au point un procédé de traitement d'au moins une couche mince à base d'oxyde de titane, continue et déposée sur une première face d'un substrat, caractérisé en ce que l'on porte chaque point de ladite au moins une couche mince à une température d'au moins 300°C en maintenant une température inférieure ou égale à 150°C en tout point de la face dudit substrat opposée à ladite première face, de manière à augmenter le taux de cristallisation de ladite couche mince en la conservant continue et sans étape de fusion de ladite couche mince.

Parmi les procédés possibles figurent en particulier le chauffage à l'aide d'un rayonnement infrarouge, d'une torche plasma ou d'une flamme.

Les inventeurs ont maintenant mis en évidence qu'il était encore possible d'améliorer les propriétés de cristallisation des couches à base d'oxyde de titane en perfectionnant ce procédé.

A cet effet, l'invention a pour objet un procédé d'obtention d'un matériau comprenant un substrat et au moins une couche mince à base d'oxyde de titane au moins partiellement cristallisé et déposée sur une première face dudit substrat, ledit procédé comprenant les étapes suivantes :
- on dépose ladite au moins une couche mince à base d'oxyde de titane,
- on soumet ladite au moins une couche mince à base d'oxyde de titane à un traitement de cristallisation en apportant une énergie susceptible de porter chaque point de ladite au moins une couche mince à base d'oxyde de titane à une température d'au moins 300°C tout en maintenant une température inférieure ou égale à 150°C notamment 50°C en tout point de la face dudit substrat opposée à ladite première face. Dans le procédé selon l'invention, le traitement de cristallisation est précédé d'une étape de dépôt, au-dessus et/ou en dessous de ladite couche mince à base d'oxyde de titane, d'une couche pourvoyeuse d'énergie, susceptible d'absorber l'énergie apportée lors dudit traitement de cristallisation plus efficacement que ladite au moins une couche d'oxyde de titane et/ou de créer une énergie supplémentaire lors dudit traitement de cristallisation, et de transmettre au moins une partie de ladite énergie à ladite au moins une couche mince à base d'oxyde de titane lors dudit traitement de cristallisation.

L'amélioration apportée au procédé précédemment mis au point par la demanderesse consiste donc en la présence d'une surcouche et/ou d'une sous-couche (de préférence une surcouche) qui va favoriser la cristallisation de l'oxyde de titane grâce à des phénomènes d'absorption ou de création d'énergie, et de transfert de l'énergie absorbée ou créée vers la couche d'oxyde de titane. L'énergie finale apportée à la couche d'oxyde de titane est donc supérieure à celle apportée par le seul traitement de cristallisation. Le procédé selon l'invention permet ainsi, pour une même énergie apportée lors du traitement de cristallisation, d'améliorer les propriétés de cristallisation, ou, alternativement, d'obtenir des propriétés de cristallisation équivalentes pour un traitement de cristallisation moins consommateur d'énergie.

Par « point de la couche », on entend une zone de la couche subissant le traitement à un instant donné. Selon l'invention, la totalité de la couche (donc chaque point) est portée à une température d'au moins 300°C, mais chaque point de la couche n'est pas nécessairement traité simultanément. La couche peut être traitée au même instant dans son ensemble, chaque point de la couche étant simultanément porté à une température d'au moins 300°C. La couche peut alternativement être traitée de manière à ce que les différents points de la couche ou des ensembles de points soient successivement portés à une température d'au moins 300°C, ce deuxième mode étant plus souvent employé dans le cas d'une mise en oeuvre continue à l'échelle industrielle.

Par « déposée sur une première face dudit substrat », on n'entend pas nécessairement que la couche est déposée directement sur le substrat. Elle peut l'être, mais une ou plusieurs sous-couches peuvent être interposées entre le substrat et la couche à base d'oxyde de titane, comme explicité dans la suite du texte.

La couche pourvoyeuse d'énergie est de préférence déposée au dessus de la couche mince à base d'oxyde de titane. Il s'agit dans ce cas d'une surcouche.

Le procédé selon l'invention permet d'apporter une énergie importante, qui favorise la cristallisation de la couche mince, par un mécanisme de croissance cristalline autour de germes déjà présents dans la couche, en restant en phase solide.

Le procédé selon l'invention présente l'avantage de ne chauffer que la couche mince (ou les couches minces dans le cas d'un empilement), sans échauffement significatif de la totalité du substrat. Il n'est ainsi plus nécessaire de procéder à un refroidissement lent et contrôlé du substrat avant la découpe ou le stockage du verre. Ce procédé rend également possible l'intégration d'un dispositif de chauffage sur les lignes de production continue existantes, plus particulièrement dans l'espace situé entre la sortie de l'enceinte de dépôt sous vide de la ligne magnétron et le dispositif de stockage du verre par empilage. Il est également possible dans certains cas de réaliser le traitement selon l'invention au sein même de l'enceinte de dépôt sous vide.

Dans une mise en oeuvre industrielle intégrée à une ligne magnétron, le procédé est généralement continu au sens où le substrat est en défilement, donc subit un mouvement linéaire dans une direction X. Chaque point de la couche mince est alors de préférence traité selon l'un des modes suivants : soit les moyens de chauffage sont fixes et l'on peut traiter simultanément un ensemble de points formant une ligne selon une direction Y perpendiculaire à la direction X, soit les moyens de chauffage sont mobiles selon la direction Y et l'on traite successivement chaque point. Le procédé selon l'invention peut être mis en oeuvre sur un substrat placé aussi bien horizontalement que verticalement. Il peut également être mis en oeuvre sur un substrat pourvu de couches minces sur ses deux faces, au moins une couche d'une des faces ou de chaque face étant traitée selon l'invention. Dans le cas où des couches minces déposées sur les deux faces du substrat sont traitées selon l'invention, il est possible de traiter lesdites couches minces de chaque face soit simultanément, soit successivement, par des techniques identiques ou distinctes, en particulier selon que la nature des couches traitées est identique ou distincte. Le cas où le traitement selon l'invention est réalisé simultanément sur les deux faces du substrat est donc bien compris dans la portée de l'invention.

Il n'est pas physiquement possible de chauffer la couche sans chauffer le substrat, car l'élévation de température au sein de la couche entraîne nécessairement, par des mécanismes de conduction thermique, un chauffage de la zone du substrat la plus proche de la couche, et donc un gradient thermique élevé dans l'épaisseur du substrat. De tels gradients thermiques élevés, parfois appelés chocs thermiques, sont connus pour générer systématiquement des casses dans le cas des verres silico-sodo-calciques couramment employés dans l'industrie du verre plat. Ces casses, qui ont pour origine le différentiel de dilatation thermique entre les différentes zones du verre soumises à des températures différentes, se produisent plus aisément dans le cas des verres silico-sodo-calciques car leur coefficient de dilatation est assez élevé. Elles se produisent également plus aisément dans le cas de substrats de grande dimension (d'au moins 1 m, voire 2 ou même 3 m de large) car il est plus délicat d'assurer une homogénéité de température élevée pour de grands substrats.

Les inventeurs ont toutefois mis en évidence qu'un traitement thermique ne mettant en oeuvre qu'un chauffage modéré et contrôlé d'une zone limitée du substrat permettait de s'affranchir de ce problème de casse, jusqu'alors jugé inévitable. Il est donc indispensable pour la mise en oeuvre de la présente invention que la température de la face du substrat opposée à la face portant la couche mince traitée ne soit pas supérieure à 150°C. Cette caractéristique est obtenue en choisissant un mode de chauffage spécialement adapté au chauffage de la couche mince et non du substrat et en contrôlant le temps ou l'intensité de chauffage et/ou d'autres paramètres en fonction du mode de chauffage employé, comme décrit plus en détail dans la suite du texte.

Une caractéristique commune à tous les modes de chauffage utilisables selon l'invention réside dans le fait qu'ils permettent de générer une puissance par unité de surface extrêmement élevée, qui ne peut toutefois pas être quantifiée de manière absolue car elle dépend de nombreux facteurs parmi lesquels la nature et l'épaisseur de la couche mince. Cette forte puissance par unité de surface permet d'atteindre au niveau de la couche la température souhaitée extrêmement rapidement (en général en un temps inférieur ou égal à 1 seconde) et par conséquent de limiter d'autant la durée du traitement, la chaleur générée n'ayant alors pas le temps de diffuser au sein du substrat. Chaque point de la couche mince est soumis au traitement selon l'invention (c'est-à-dire porté à une température supérieure ou égale à 300°C) pour une durée généralement inférieure ou égale à 1 seconde, voire 0,5 seconde. A l'inverse, les lampes infrarouge classiquement utilisées ne permettant pas d'atteindre ces fortes puissances par unité de surface, le temps de traitement doit être plus long pour atteindre les températures désirées (souvent plusieurs secondes), et le substrat est alors nécessairement porté à des températures élevées par diffusion de la chaleur.

Afin de limiter au maximum le nombre de casses pour les substrats les plus grands (par exemple de 6 m de long sur 3 m de large), on maintient de préférence tout au long du traitement une température inférieure ou égale à 100°C, notamment 50°C, en tout point de la face du substrat opposée à la face sur laquelle est déposée la couche mince.

Un autre avantage de l'invention réside dans le fait que le procédé fait subir l'équivalent d'une trempe à la couche mince ou à l'empilement de couches minces. Il arrive que certains empilements de couches minces voient leurs propriétés optiques (coordonnées colorimétriques, transmission lumineuse ou énergétique) modifiées lorsque le verre est trempé. Le procédé selon l'invention permet alors d'obtenir un verre non trempé (donc ne présentant pas en son sein un profil de contraintes spécifique au verre trempé, ce qui le rend découpable) mais présentant sensiblement les mêmes propriétés optiques que s'il avait été trempé.

Le taux de cristallisation obtenu à l'aide du procédé selon l'invention est de préférence supérieur ou égal à 10%, voire 20% ou 50 %, notamment 70% et même 90%. Ce taux de cristallisation, défini comme étant la masse de matériau cristallisé sur la masse totale de matériau, peut être évalué par diffraction des rayons X en utilisant la méthode de Rietveld. Du fait d'un mécanisme de cristallisation par croissance de grains cristallins à partir de germes ou nuclei, l'augmentation du taux de cristallisation s'accompagne généralement d'une augmentation de la taille des grains cristallisés ou des domaines cohérents de diffraction mesurés par diffraction des rayons X.

Le substrat est de préférence transparent, en verre, notamment silico-sodo-calcique. Le substrat peut être incolore ou coloré, par exemple en bleu, vert, bronze ou gris. Il peut également être en matière plastique, tel que le polycarbonate ou le polyméthacrylate de méthyle. Il présente avantageusement au moins une dimension supérieure ou égale à 1 m, voire 2 m et même 3 m. L'épaisseur du substrat varie généralement entre 0,5 mm et 19 mm, le procédé selon l'invention étant particulièrement avantageux pour les substrats les plus minces, dont l'épaisseur est inférieure ou égale à 4 mm, voire 2 mm.

La face du substrat opposée à la face sur laquelle la couche à base d'oxyde de titane est déposée peut être nue, ou être recouverte par une ou plusieurs couches minces. Il peut notamment s'agir de couche à base d'oxyde de titane, ou de couches à fonctions thermiques (couches ou empilements de contrôle solaire ou bas-émissifs, notamment du type comprenant au moins une couche d'argent) ou optiques (par exemples couches ou empilements antireflets).

La couche à base d'oxyde de titane est de préférence une couche en oxyde de titane (éventuellement dopé par un ion métallique, par exemple un ion d'un métal de transition, ou par des atomes d'azote, de carbone, de fluor...).

L'intégralité de la surface de cette couche est de préférence en contact avec l'extérieur de manière à ce que l'oxyde de titane puisse pleinement jouer sa fonction autonettoyante. Il peut toutefois être intéressant de revêtir la couche à base d'oxyde de titane d'une fine couche hydrophile, notamment à base de silice. Un des avantages du procédé selon l'invention est que cette fine couche peut résulter de la couche pourvoyeuse d'énergie après le traitement de cristallisation, comme détaillé dans la suite du texte.

Afin d'améliorer encore la cristallisation de ces couches, il est possible de prévoir directement sous la couche à base d'oxyde de titane une sous-couche ayant pour effet de favoriser la croissance cristalline de l'oxyde de titane, notamment sous forme anatase. Il peut notamment s'agir d'une sous-couche en ZrO₂, telle que décrite dans la demande WO 02/40417, ou encore une sous-couche favorisant la croissance hétéro-épitaxiale de l'oxyde de titane sous forme anatase, telle que décrite par exemple dans la demande WO2005/040058, notamment une couche en BaTiO₃ ou SrTiO₃.

D'autres sous-couches peuvent être insérées entre le substrat et la couche à base d'oxyde de titane. Il peut par exemple s'agir de couches barrières à la migration des alcalins, notamment de couches à base de SiO₂, de SiOC, d'alumine Al₂O₃, de nitrure de silicium Si₃N₄. Il peut encore s'agir de couches ou empilements à fonctions thermiques (couches ou empilements de contrôle solaire ou bas-émissifs, notamment du type comprenant au moins une couche d'argent) ou optiques (par exemples couches ou empilements antireflets).

La couche mince à base d'oxyde de titane ou la couche pourvoyeuse d'énergie peut être obtenue par tout type de procédé, en particulier des procédés générant des couches majoritairement amorphes ou nano-cristallisées, tels que le procédé magnétron, le procédé de dépôt chimique en phase vapeur assisté par plasma (PECVD), le procédé d'évaporation sous vide, ou le procédé sol-gel. Elle est toutefois de préférence une couche « sèche », ne contenant pas de solvant aqueux ou organique, en opposition avec une couche « humide », par exemple obtenue par le procédé sol-gel.

La couche mince à base d'oxyde de titane et la couche pourvoyeuse d'énergie sont de préférence déposées par pulvérisation cathodique, notamment assisté par un champ magnétique (procédé magnétron).

Dans le cas d'une couche obtenue par le procédé sol-gel, des précurseurs en solution (sol) sont déposés sur le substrat, la couche obtenue devant ensuite être séchée et recuite pour éliminer toute trace de solvant. Dans ce cas, l'énergie apportée par le chauffage sert alors majoritairement à éliminer ce solvant, sans affecter nécessairement les propriétés de cristallisation de la couche, et il est par conséquent plus difficile d'améliorer lesdites propriétés en un temps suffisamment court pour ne pas chauffer également le substrat.

La couche pourvoyeuse d'énergie est de préférence déposée en contact direct avec la couche à base d'oxyde de titane, de préférence sur cette dernière. De cette manière, on optimise les transferts d'énergie de la couche pourvoyeuse d'énergie vers la couche à base d'oxyde de titane.

La couche pourvoyeuse d'énergie présente de préférence une absorption dans un domaine de longueur d'ondes compris entre 300 et 3000 nm, de préférence entre 600 et 1100 nm, notamment entre 800 et 1100 nm. Il est ainsi possible d'utiliser des techniques mettant en oeuvre un rayonnement situé dans ce domaine, comme des lasers YAG, des diodes laser ou des lampes infrarouges associées à des dispositifs de focalisation. La couche pourvoyeuse d'énergie absorbe ce rayonnement, et transmet par conduction une partie de l'énergie vers la couche d'oxyde de titane. En l'absence de couche pourvoyeuse d'énergie, l'oxyde de titane serait peu affecté par ce type de rayonnement car il ne présente pas d'absorption particulière dans ce domaine de longueurs d'ondes.

La couche pourvoyeuse d'énergie peut, alternativement ou cumulativement, être susceptible d'émettre de l'énergie par réaction exothermique, notamment de combustion ou d'oxydation. La couche pourvoyeuse d'énergie peut ainsi brûler sous l'effet du traitement de cristallisation, émettant à proximité de, et transférant vers la couche d'oxyde de titane une énergie importante qui contribuera à améliorer sa cristallisation.

La couche pourvoyeuse d'énergie peut être susceptible de s'évaporer au moins partiellement, voire totalement, lors du traitement de cristallisation. Dans le cas d'une réaction de combustion ou d'oxydation, la couche peut se transformer au moins partiellement en gaz.

La couche pourvoyeuse d'énergie peut encore être susceptible de s'oxyder au moins partiellement, voire totalement, lors du traitement de cristallisation, et de devenir au moins partiellement transparente dans le domaine du visible.

Ces couches pourvoyeuses d'énergie qui s'évaporent ou s'oxydent peuvent être qualifiées de couches sacrificielles, au sens où, après avoir joué leur rôle de pourvoyeuse d'énergie au profit de l'oxyde de titane, elles ne font plus partie en tant que telles (sous leur forme initiale) du matériau final.

Alternativement, la couche pourvoyeuse d'énergie, ou son produit de réaction pendant le traitement de cristallisation, peuvent rester en surface du matériau après traitement. Dans ce cas, il peut être nécessaire de les éliminer, par exemple par des traitements chimiques ou de nettoyage.

Différentes natures de couches peuvent mettre en oeuvre une ou plusieurs de ces propriétés avantageuses.

La couche pourvoyeuse d'énergie peut par exemple être en titane métallique. Le titane métallique absorbe dans le domaine de longueurs d'ondes du visible et du proche infrarouge, domaine dans lequel son oxyde est transparent. En outre, une partie du titane métallique va s'évaporer lors du traitement thermique, l'autre partie s'oxydant pour devenir de l'oxyde de titane. La couche de titane métallique disparaît par conséquent lors du traitement de cristallisation, et le produit final obtenu ne comprend plus de surcouche de titane absorbante. La couche de titane est de préférence déposée par pulvérisation cathodique assistée par champ magnétique (procédé magnétron) en utilisant une cible en titane sous atmosphère d'argon.

La couche pourvoyeuse d'énergie peut aussi être en carbone, notamment du type graphite et/ou diamant. Le carbone absorbe le rayonnement infrarouge, et sous l'effet du traitement de cristallisation, notamment lorsqu'il met en oeuvre une flamme ou une torche plasma, le carbone va subir une réaction de combustion. L'énergie dégagée par cette réaction exothermique va contribuer à favoriser la cristallisation de l'oxyde de titane. La couche de graphite est avantageusement déposée par pulvérisation cathodique assistée par champ magnétique (procédé magnétron) en utilisant une cible en graphite sous atmosphère d'argon. D'autres procédés possibles comprennent le dépôt par source ionique, le dépôt chimique en phase vapeur assisté par plasma (PECVD).

La couche pourvoyeuse d'énergie peut encore être en silicium, éventuellement allié avec de l'aluminium. Le silicium présente une forte absorption dans le domaine de longueurs d'ondes allant du visible au proche infrarouge. Sous l'effet du traitement de cristallisation, notamment lorsqu'il met en oeuvre un laser émettant dans l'infrarouge, le silicium va en outre s'oxyder, donnant naissance à une couche de silice, comprenant éventuellement de l'aluminium. Cette oxydation est exothermique et va donc dégager une énergie dont une partie servira à favoriser la cristallisation de l'oxyde de titane. La couche de silice obtenue est hydrophile et peut contribuer, si son épaisseur est faible (moins de 5 nm, voire moins de 2 nm), à améliorer les propriétés d'hydrophilie photo-induite de l'oxyde de titane, et par conséquent ses propriétés autonettoyantes et antisalissure. Le silicium peut être dopé par de l'aluminium, notamment à des teneurs comprises entre 5 et 10% massiques. La présence d'aluminium améliore en effet la stabilité chimique de la couche. En outre, le dépôt par pulvérisation cathodique de telles couches est facilité, car l'aluminium contribue à augmenter la conductivité électronique des cibles en silicium.

La couche pourvoyeuse d'énergie peut aussi être en carbure de titane ou de silicium. Ces couches présentent de fortes absorptions dans le domaine du visible et du proche infrarouge, domaine pour lequel l'oxyde de titane est transparent. Sous l'effet du traitement de cristallisation, ces couches vont s'oxyder respectivement en oxyde de titane (et donc s'intégrer à la couche d'oxyde de titane sous-jacente, en créant une surépaisseur), ou en oxyde de silicium, qui présente les avantages susmentionnés.

La couche pourvoyeuse d'énergie présente une épaisseur avantageusement comprise entre 1 et 100 nm, notamment entre 1 et 20 nm.

Pour plus de simplicité, le traitement de cristallisation se fait de préférence sous air et/ou à pression atmosphérique. Certains traitements sont toutefois compatibles avec le vide, et il peut être avantageux de procéder au traitement de cristallisation au sein même de l'enceinte de dépôt sous vide.

Différents moyens de chauffage permettent de mettre en oeuvre le traitement de cristallisation, en permettant la génération d'une puissance par unité de surface très élevée. Les paramètres du chauffage tels que la puissance des moyens de chauffage ou le temps de chauffage sont à adapter au cas par cas par l'homme du métier en fonction de divers paramètres tels que la nature du procédé de chauffage, l'épaisseur de la couche, la taille et l'épaisseur des substrats à traiter etc.

Le traitement de cristallisation peut être réalisé à l'aide d'un rayonnement infrarouge. Afin de limiter au maximum les apports de chaleur au substrat, la longueur d'onde du rayonnement choisi n'est de préférence pas comprise dans la partie du rayonnement infrarouge absorbée par le substrat. Pour les raisons susmentionnées, le rayonnement doit se caractériser par une puissance par unité de surface élevée. Pour cette raison, le chauffage de la couche mince est de préférence réalisé à l'aide d'un laser émettant un rayonnement infrarouge. Des systèmes de lampes infrarouges associées à un dispositif de focalisation (par exemple une lentille cylindrique) permettant d'atteindre de fortes puissances par unité de surface sont également utilisables.

On peut employer un laser émettant un rayonnement dont la longueur d'ondes est comprise entre 5 et 15 micromètres, par exemple un laser à CO₂ émettant un rayonnement dont la longueur d'onde est de 10,6 micromètres. L'avantage est que l'oxyde de titane absorbe dans ce domaine de longueurs d'ondes.

Il est toutefois préférable d'employer un laser émettant un rayonnement dont la longueur d'ondes est comprise entre 0,5 et 3 micromètres. On choisit alors de préférence une couche pourvoyeuse d'énergie qui présente une absorption importante dans ce domaine de longueurs d'ondes, comme le titane, le carbone sous forme graphite, le silicium éventuellement dopé à l'aluminium, ou encore le carbure de silicium ou de titane. Un laser YAG (grenat d'aluminium et d'yttrium Y₂Al₁₅O₂) dopé au néodyme, émettant, en mode continu ou pulsé, un rayonnement d'environ 1 micromètre de longueur d'onde, s'est révélé particulièrement bien adapté, notamment lorsque le substrat n'absorbe pas dans ce domaine de longueurs d'ondes, ce qui est le cas pour des verres clairs, dont la teneur pondérale en oxyde de fer est de 0,1% ou moins. Il est également possible d'employer des lasers diode, dont la longueur d'ondes d'émission est de l'ordre de 800 nm.

L'utilisation de lasers à excimère, émettant un rayonnement dans le domaine de l'ultraviolet, est également possible pour des couches absorbant un tel rayonnement.

Pour une simplicité de mise en oeuvre accrue, les lasers employés dans le cadre de l'invention peuvent être fibrés, ce qui signifie que le rayonnement laser est injecté dans une fibre optique puis délivré près de la surface à traiter par une tête de focalisation. Le laser peut également être à fibre, au sens où le milieu d'amplification est lui-même une fibre optique.

Les lasers ne pouvant irradier qu'une faible surface (typiquement de l'ordre d'une fraction de mm² à quelque centaines de mm²), il est nécessaire, afin de traiter toute la surface, de prévoir un système de déplacement du faisceau laser dans le plan du substrat ou un système formant un faisceau laser en ligne irradiant simultanément toute la largeur du substrat, et sous laquelle ce dernier vient défiler.

Le traitement de cristallisation peut encore être réalisé par des techniques de projection thermique, notamment par une technique de projection par torche plasma (plasma spray).

Un plasma est un gaz ionisé généralement obtenu en soumettant un gaz dit « plasmagène » à une excitation telle qu'un fort champ électrique continu ou alternatif (par exemple un arc électrique). Sous l'action de cette excitation, des électrons sont arrachés aux atomes du gaz et les charges ainsi créées migrent vers les électrodes de charge opposée. Ces charges excitent ensuite d'autres atomes du gaz par collision, créant par effet d'avalanche une décharge homogène ou microfilamentaire ou encore un arc. Les plasmas peuvent être « chauds » (le gaz est alors entièrement ionisé et la température du plasma est de l'ordre de 10⁶°C), ou « thermiques » (le gaz est presque entièrement ionisé et la température du plasma est de l'ordre de 10⁴°C, cas par exemple des arcs électriques). Les plasmas contiennent beaucoup d'espèces actives, c'est-à-dire susceptibles d'interagir avec la matière, dont les ions, les électrons ou les radicaux libres. Dans le cas d'une torche plasma, un gaz est insufflé à travers un arc électrique, et le plasma thermique formé est soufflé vers le substrat à traiter. La torche plasma est couramment employée pour déposer des couches minces sur des substrats divers en ajoutant dans le plasma des précurseurs sous forme de poudres.

Dans le cadre de l'invention, la torche plasma est de préférence associée à un système de déplacement automatique situé perpendiculairement au sens de défilement du substrat revêtu et permettant le traitement de l'ensemble de la surface par aller-retour successif de la torche au dessus du substrat.

Le gaz insufflé est de préférence de l'azote, de l'air ou de l'argon, comprenant avantageusement une teneur volumique en hydrogène comprise entre 5 et 50%, notamment entre 15 et 30%.

Le traitement de cristallisation peut également être réalisé en soumettant la couche mince à l'action d'au moins une flamme.

Ce traitement de flammage est de préférence réalisé sur un banc de flammage situé perpendiculairement au sens de défilement du substrat. La longueur du dispositif de flammage est de préférence au moins égale à la largeur du substrat revêtu, ce qui permet aisément le traitement au défilé sans nécessiter de système de déplacement. Le gaz utilisé peut être un mélange d'un gaz oxydant, notamment choisi parmi l'air, l'oxygène ou leurs mélanges, et d'un gaz combustible, notamment choisi parmi le gaz naturel, le propane, le butane, voire l'acétylène ou l'hydrogène, ou leurs mélanges. L'oxygène est préféré comme gaz oxydant, en particulier en combinaison avec le gaz naturel (méthane) ou le propane, d'une part car il permet d'atteindre des températures plus élevées et par conséquent de raccourcir le traitement et d'éviter la chauffe du substrat, et d'autre part car il permet d'éviter la création d'oxydes d'azote NOₓ. Pour atteindre les températures souhaitées au niveau de la couche mince, le substrat revêtu est généralement positionné au sein de la flamme visible, notamment au niveau de la zone la plus chaude de la flamme, une partie de la flamme visible s'étendant alors autour de la zone traitée.

Le flammage est une technique couramment employée pour le traitement de la surface de polymères afin d'améliorer leurs propriétés de mouillabilité et faciliter leur revêtement par des peintures. Dans l'utilisation qui en est faite, le principe est de soumettre la surface à traiter à l'action de radicaux créés par la combustion, sans porter ladite surface à une température élevée. La demande US 2006/128563 décrit l'utilisation de cette technique pour activer des surfaces de couches d'oxyde de titane afin d'améliorer leurs propriétés d'hydrophilie. Les traitements décrits, assez similaires à ceux pratiqués sur les substrats polymères, consistent à faire défiler un substrat au niveau ou légèrement en-dessous (quelques centimètres) de la pointe de la flamme visible. Ce type de traitement, qui vise à créer des groupements hydroxyles à la surface de l'oxyde de titane, n'est toutefois pas propre à porter la couche mince d'oxyde de titane à des températures supérieures à 200°C et à augmenter le taux de cristallisation de l'oxyde de titane, car les températures au niveau de la pointe de la flamme visible sont insuffisantes.

Le flammage est préféré lorsque l'on ne souhaite pas mettre en oeuvre de dispositif mécanique de déplacement au-dessus du substrat. Le traitement par rayonnement infrarouge peut quant à lui être mis en oeuvre au sein du dispositif de dépôt sous vide de la ligne magnétron. Il est également avantageux lorsque l'on ne souhaite pas consommer de grandes quantités de gaz.

Toutes les combinaisons possibles entre les différentes natures de couches pourvoyeuses d'énergie et les différents procédés de cristallisation sont possibles. Selon un mode de réalisation préféré de l'invention, la couche pourvoyeuse d'énergie est en titane, et le traitement de cristallisation est réalisé à l'aide d'un rayonnement infrarouge, en particulier à l'aide d'un laser émettant un rayonnement compris entre 0,5 et 3 micromètres, par exemple un laser YAG ou une diode laser. Selon un autre mode de réalisation préféré, la couche pourvoyeuse d'énergie est en graphite et le traitement de cristallisation est réalisé par flammage.

Le procédé selon l'invention est particulièrement avantageux car lorsqu'un substrat contenant des ions alcalins (par exemple un verre du type silico-sodo-calcique) est porté à une température élevée, lesdits ions ont tendance à diffuser dans la couche d'oxyde de titane en amoindrissant très sensiblement, voire en annulant, ses propriétés photocatalytiques. Pour cette raison, il est d'usage d'interposer entre la couche mince d'oxyde de titane et le substrat une couche barrière à la migration des alcalins, comme enseigné dans la demande EP-A-0 850 204, ou d'augmenter l'épaisseur de la couche d'oxyde de titane pour qu'au moins l'extrême surface de la couche ne soit pas contaminée, comme enseigné dans la demande EP-A-0 966 409. Dans le cas du procédé selon l'invention, le substrat n'est presque pas chauffé et la migration des alcalins est par conséquent quasiment nulle. Le procédé selon l'invention permet donc d'obtenir des substrats en verre silico-sodo-calcique revêtus directement d'une fine couche d'oxyde de titane (par exemple de l'ordre de 10 nanomètres d'épaisseur) et présentant néanmoins une très forte activité photocatalytique.

L'invention est illustrée à l'aide des exemples de réalisation non limitatifs qui suivent.

Un substrat en verre silico-sodo-calcique obtenu par le procédé float puis découpé de manière à ce que sa taille soit de 3 m de largeur pour 6 m de longueur est revêtu de manière connue par le procédé magnétron d'une couche de silice de 20 nm d'épaisseur puis d'une couche mince d'oxyde de titane de 10 nm d'épaisseur.

L'exemple comparatif C1 ne comprend pas de couche pourvoyeuse d'énergie. Les exemples selon l'invention sont en revanche revêtus d'une surcouche en Ti de 5 nm d'épaisseur. La couche de titane est de préférence déposée par pulvérisation cathodique assistée par champ magnétique (procédé magnétron) en utilisant une cible en titane sous atmosphère d'argon.

Entre la sortie de la ligne magnétron et le dispositif de stockage, on insère un dispositif comprenant un laser diode émettant un rayonnement à 808 nm de longueur d'onde focalisé sur la surcouche de Ti, selon une ligne correspondant à la largeur du substrat.

Tous les exemples à l'exception de l'exemple C2 subissent ce traitement de cristallisation. La température du substrat en verre au cours du traitement ne dépasse pas 50°C, mesurée par pyrométrie au niveau de la face du substrat opposée à la face portant le revêtement de couches minces.

Le tableau 1 ci-après indique l'activité photocatalytique des couches avant traitement et suite au traitement. Chaque essai est caractérisé par l'épaisseur de la surcouche de titane et par la vitesse de traitement. La vitesse de traitement, directement reliée à l'échauffement de la couche, est exprimée en mètres par minute : elle correspond à la vitesse de défilement du verre dans le sens de la longueur.

L'activité photocatalytique correspond à une mesure de vitesse de dégradation d'acide stéarique.

La mesure de l'activité photocatalytique est effectuée de la façon suivante :
- découpe d'échantillons de 5x5 cm²,
- nettoyage des échantillons pendant 45 minutes sous irradiation UV et sous balayage d'oxygène,
- mesure du spectre infrarouge par FTIR pour des nombres d'onde compris entre 4000 et 400cm⁻¹, pour constituer un spectre de référence,
- dépôt de l'acide stéarique : 60 microlitres d'une solution d'acide stéarique dissout à raison de 5g/L dans de l'éthanol est déposée par spin-coating sur l'échantillon,
- mesure du spectre infrarouge par FTIR, mesure de l'aire des bandes d'élongation des liaisons CH₂-CH₃ entre 3000 et 2700cm⁻¹,
- exposition au rayonnement de type UVA : la puissance reçue par l'échantillon, d'environ 35 W/m² pour simuler l'exposition en extérieur, est contrôlée par une cellule photoélectrique dans la gamme de longueurs d'onde 315-400nm,
- suivi de la photodégradation de la couche d'acide stéarique après des expositions successives de 30 min., puis 30 min. puis 1 heure par mesure de l'aire des bandes d'élongation des liaisons CH₂-CH₃ entre 3000 et 2700cm⁻¹.
- l'activité photocatalytique est définie par la pente, exprimée en cm⁻¹.min⁻¹, de la droite représentant l'aire des bandes d'élongation des liaisons CH₂-CH₃ entre 3000 et 2700cm⁻¹, pour une durée comprise entre 0 et 2 heures.

**Tableau 1**

| | Ep (nm) | vitesse (m/min.) | Activité (x10⁻⁴cm⁻¹.min⁻¹) |
|---|---|---|---|
| C1 | 0 | 5 | 3 |
| C2 | 5 | 0 | - |
| 1 | 5 | 10 | 6 |
| 2 | 5 | 8 | 12 |
| 3 | 5 | 6 | 10 |
| 4 | 5 | 4 | 22 |

L'exemple comparatif C1 ne comporte pas de couche pourvoyeuse d'énergie. L'activité photocatalytique est faible, mais n'est pas nulle, ce qui témoigne probablement d'une légère cristallisation lors du traitement. La cristallisation est légère car l'oxyde de titane est transparent à la longueur d'ondes employée et n'absorbe donc pas d'énergie. L'exemple comparatif C2 a été recouvert d'une couche de titane métallique mais n'a pas subi de traitement de cristallisation. La présence du titane en surface dégrade fortement l'activité photocatalytique, qui n'est pas mesurable. Les exemples 1 à 4 selon l'invention montrent que l'utilisation d'une couche pourvoyeuse d'énergie permet d'améliorer considérablement l'activité photocatalytique. Ce résultat est dû au fait que le titane absorbe le rayonnement du laser, et transmet cette énergie à l'oxyde de titane qui peut alors de réorganiser et cristalliser. En outre, le titane s'évapore et/ou s'oxyde en grande partie, puisque la transmission lumineuse après traitement est presque aussi élevée qu'avant dépôt de la surcouche. De plus faibles vitesses de défilement sous le laser conduisent à des activités photocatalytiques plus élevées, du fait d'un chauffage de la couche plus intense.

## Revendications

1. Procédé d'obtention d'un matériau comprenant un substrat et au moins une couche mince à base d'oxyde de titane au moins partiellement cristallisé et déposée sur une première face dudit substrat, ledit procédé comprenant les étapes suivantes :
- on dépose ladite au moins une couche mince à base d'oxyde de titane,
- on soumet ladite au moins une couche mince à base d'oxyde de titane à un traitement de cristallisation en apportant une énergie susceptible de porter chaque point de ladite au moins une couche mince à base d'oxyde de titane à une température d'au moins 300°C tout en maintenant une température inférieure ou égale à 150°C, notamment 50°C, en tout point de la face dudit substrat opposée à ladite première face,
- ledit traitement de cristallisation étant précédé d'une étape de dépôt, au-dessus et/ou en dessous de ladite couche mince à base d'oxyde de titane, d'une couche pourvoyeuse d'énergie, susceptible d'absorber l'énergie apportée lors dudit traitement de cristallisation plus efficacement que ladite au moins une couche d'oxyde de titane et/ou de créer une énergie supplémentaire lors dudit traitement de cristallisation, et de transmettre au moins une partie de ladite énergie à ladite au moins une couche mince à base d'oxyde de titane lors dudit traitement de cristallisation.

2. Procédé selon la revendication 1, tel que le substrat est en verre, notamment silico-sodo-calcique.

3. Procédé selon l'une des revendications précédentes, dans lequel la couche pourvoyeuse d'énergie est déposée au dessus de la couche mince à base d'oxyde de titane.

4. Procédé selon l'une des revendications précédentes, tel que chaque point de la couche mince est porté à une température supérieure ou égale à 300°C pour une durée inférieure ou égale à 1 seconde, voire 0,5 seconde.

5. Procédé selon l'une des revendications précédentes, tel que la couche mince à base d'oxyde de titane et la couche pourvoyeuse d'énergie sont déposées par pulvérisation cathodique.

6. Procédé selon l'une des revendications précédentes, dans lequel la couche pourvoyeuse d'énergie est déposée en contact direct avec la couche à base d'oxyde de titane.

7. Procédé selon l'une des revendications précédentes, tel que la couche pourvoyeuse d'énergie présente une absorption dans un domaine de longueur d'ondes compris entre 800 et 1100 nm.

8. Procédé selon l'une des revendications précédentes, tel que la couche pourvoyeuse d'énergie est susceptible d'émettre de l'énergie par réaction exothermique, notamment de combustion ou d'oxydation, lors du traitement de cristallisation.

9. Procédé selon l'une des revendications précédentes, tel que la couche pourvoyeuse d'énergie est susceptible de s'évaporer au moins partiellement, voire totalement, lors du traitement de cristallisation.

10. Procédé selon l'une des revendications précédentes, tel que la couche pourvoyeuse d'énergie est susceptible de s'oxyder au moins partiellement, voire totalement, lors du traitement de cristallisation, et de devenir au moins partiellement transparente dans le domaine du visible.

11. Procédé selon l'une des revendications précédentes, tel que la couche pourvoyeuse d'énergie est en titane métallique, en silicium, éventuellement allié avec de l'aluminium, ou en carbure de titane ou de silicium.

12. Procédé selon l'une des revendications 1 à 8, tel que la couche pourvoyeuse d'énergie est en carbone, notamment du type graphite ou diamant.

13. Procédé selon l'une des revendications précédentes, tel que le traitement de cristallisation est réalisé à l'aide d'un rayonnement infrarouge.

14. Procédé selon la revendication précédente, tel qu'au moins une partie du rayonnement infrarouge est situé dans le domaine de longueurs d'ondes allant de 900 à 1100 nm.

15. Procédé selon l'une des revendications 1 à 12, tel que le traitement de cristallisation est réalisé en soumettant ladite couche mince à l'action d'au moins une flamme.

## Patentansprüche

1. Verfahren zum Erhalten eines Materials, umfassend ein Substrat und mindestens eine Dünnschicht auf Basis von mindestens teilweise kristallisiertem Titanoxid, die auf einer ersten Fläche des Substrats abgelagert ist, wobei das Verfahren die folgenden Schritte umfasst:
- Ablagern der mindestens einen Dünnschicht auf Titanoxidbasis,
- Unterziehen der mindestens einen Dünnschicht auf Titanoxidbasis einer Kristallisationsbehandlung durch Zuführen einer Energie, die geeignet ist, jeden Punkt der mindestens einen Dünnschicht auf Titanoxidbasis auf eine Temperatur von mindestens 300 °C zu bringen, bei gleichzeitigem Beibehalten einer Temperatur von weniger als oder gleich 150 °C, insbesondere 50 °C, an jeden Punkt der Fläche des Substrats, die der ersten Fläche gegenüberliegt,
- wobei der Kristallisationsbehandlung ein Ablagerungsschritt einer energetischen Schicht oberhalb und/oder unterhalb der Dünnschicht auf Titanoxidbasis vorhergeht, die geeignet ist, die bei der Kristallisationsbehandlung zugeführte Energie effizienter zu absorbieren als die mindestens eine Titanoxidschicht und/oder eine zusätzliche Energie bei der Kristallisationsbehandlung zu erzeugen, und mindestens einen Teil der Energie bei der Kristallisationsbehandlung auf die mindestens eine Dünnschicht auf Titanoxidbasis zu übertragen.

2. Verfahren nach Anspruch 1, wobei das Substrat ein Glas, insbesondere Kalknatronsilikat-Glas, ist.

3. Verfahren nach einem der vorhergehenden Ansprüche, wobei die energetische Schicht oberhalb der Dünnschicht auf Titanoxidbasis abgelagert ist.

4. Verfahren nach einem der vorhergehenden Ansprüche, wobei jeder Punkt der Dünnschicht für eine Dauer von weniger oder gleich 1 Sekunde, sogar 0,5 Sekunden, auf eine Temperatur größer als oder gleich 300 °C gebracht wird.

5. Verfahren nach einem der vorhergehenden Ansprüche, wobei die Dünnschicht auf Titanoxidbasis und die energetische Schicht durch Kathodenzerstäubung abgelagert werden.

6. Verfahren nach einem der vorhergehenden Ansprüche, wobei die energetische Schicht in direktem Kontakt mit der Schicht auf Titanoxidbasis abgelagert wird.

7. Verfahren nach einem der vorhergehenden Ansprüche, wobei die energetische Schicht eine Absorption in einem Wellenlängenbereich zwischen 800 und 1100 nm aufweist.

8. Verfahren nach einem der vorhergehenden Ansprüche, wobei die energetische Schicht geeignet ist, bei der Kristallisationsbehandlung Energie durch eine exotherme Reaktion, insbesondere eine Verbrennung oder Oxidation, abzugeben.

9. Verfahren nach einem der vorhergehenden Ansprüche, wobei die energetische Schicht geeignet ist, bei der Kristallisationsbehandlung zumindest teilweise, oder sogar vollständig, zu verdampfen.

10. Verfahren nach einem der vorhergehenden Ansprüche, wobei die energetische Schicht geeignet ist, bei der Kristallisationsbehandlung zumindest teilweise, oder sogar vollständig, zu oxidieren und im sichtbaren Bereich zumindest teilweise transparent zu werden.

11. Verfahren nach einem der vorhergehenden Ansprüche, wobei die Energie liefernde Schicht aus metallischem Titan, aus eventuell mit Aluminium legiertem Silizium, oder aus Titancarbid oder Siliziumcarbid besteht.

12. Verfahren nach einem der Ansprüche 1 bis 8, wobei die energetische Schicht aus Kohlenstoff, insbesondere vom Typ Graphit oder Diamant, besteht.

13. Verfahren nach einem der vorhergehenden Ansprüche, wobei die Kristallisationsbehandlung mithilfe einer Infrarotbestrahlung verwirklicht wird.

14. Verfahren nach dem vorhergehenden Anspruch, wobei mindestens ein Abschnitt der Infrarotbestrahlung im Wellenlängenbereich von 900 bis 1100 nm angeordnet ist.

15. Verfahren nach einem der Ansprüche 1 bis 12, wobei die Kristallisationsbehandlung verwirklicht wird, indem die Dünnschicht der Tätigkeit mindestens einer Flamme ausgesetzt wird.

## Claims

1. A process for obtaining a material comprising a substrate and at least one at least partially crystalline titanium-oxide-based thin film deposited on a first side of said substrate, said process comprising the following steps:
- said at least one titanium-oxide-based thin film is deposited;
- said at least one titanium-oxide-based thin film is subjected to a crystallization treatment, supplying energy capable of raising each point of said at least one titanium-oxide-based thin film to a temperature of at least 300°C while maintaining a temperature not exceeding 150°C, especially 50°C, at any point on the opposite side of said substrate to said first side;
- said crystallization treatment being preceded by a deposition step, in which an energy-providing film is deposited above and/or below said titanium-oxide-based thin film, said energy-providing film being capable of absorbing the energy supplied during said crystallization treatment more effectively than said at least one titanium oxide film and/or of creating additional energy during said crystallization treatment, and of transmitting at least some of said energy to said at least one titanium-oxide-based thin film during said crystallization treatment.

2. The process as claimed in claim 1, such that the substrate is made of glass, especially soda-lime-silica glass.

3. The process as claimed in either of the preceding claims, in which the energy-providing film is deposited on top of the titanium-oxide-based thin film.

4. The process as claimed in one of the preceding claims, such that each point on the thin film is raised to a temperature of 300°C or higher for a time not exceeding 1 second, or even 0.5 seconds.

5. The process as claimed in one of the preceding claims, such that the titanium-oxide-based thin film and the energy-providing film are deposited by sputtering.

6. The process as claimed in one of the preceding claims, in which the energy-providing film is deposited so as to be in direct contact with the titanium-oxide-based film.

7. The process as claimed in one of the preceding claims, such that the energy-providing film has an absorption in the wavelength range between 800 and 1100 nm.

8. The process as claimed in one of the preceding claims, such that the energy-providing layer is capable of emitting energy by an exothermic reaction, especially a combustion or oxidation reaction, during the crystallization treatment.

9. The process as claimed in one of the preceding claims, such that the energy-providing layer is capable of being at least partly, or even completely, evaporated during the crystallization treatment.

10. The process as claimed in one of the preceding claims, such that the energy-providing film is capable of being at least partially or completely oxidized during the crystallization treatment and of becoming at least partially transparent in the visible range.

11. The process as claimed in one of the preceding claims, such that the energy-providing film is made of titanium metal, of silicon, optionally alloyed with aluminum, or of titanium carbide or silicon carbide.

12. The process as claimed in one of claims 1 to 8, such that the energy-providing film is made of carbon, especially of the graphite or diamond type.

13. The process as claimed in one of the preceding claims, such that the crystallization treatment is carried out using infrared radiation.

14. The process as claimed in the preceding claim, such that at least some of the infrared radiation lies within the 900 to 1100 nm wavelength range.

15. The process as claimed in one of claims 1 to 12, such that the crystallization treatment is carried out by subjecting said thin film to the action of at least one flame.
